# EUROPÄISCHE PATENTSCHRIFT

(11) **EP 2 514 022 B1**
(45) Veröffentlichungstag und Bekanntmachung des Hinweises auf die Patenterteilung: **05.08.2015**
(21) Anmeldenummer: 10770844.8
(22) Anmeldetag: 28.10.2010
(51) Int. Cl.: H01M 10/42, H01M 10/48, B67D 99/00, F17D 3/00, F25D 21/14, H01M 10/0525, H01M 10/625, H01M 10/643, H01M 10/6556, H01M 10/663, H01M 10/613

(54) **VERFAHREN UND VORRICHTUNG ZUR MINDERUNG DER FEUCHTIGKEIT EINES GASES IN EINEM BATTERIEGEHÄUSEINNENRAUM**
METHOD AND DEVICE FOR DECREASING MOISTURE IN A GAS IN A BATTERY HOUSING INTERIOR
PROCÉDÉ ET DISPOSITIF PERMETTANT DE RÉDUIRE L'HUMIDITÉ D'UN GAZ DANS L'ESPACE INTÉRIEUR D'UN BOÎTIER DE BATTERIE

(30) Priorität: 18.12.2009 DE 102009054922
(43) Veröffentlichungstag der Anmeldung: 24.10.2012
(73) Patentinhaber: Samsung SDI Co., Ltd., Gyeonggi-do (KR); Robert Bosch GmbH, 70442 Stuttgart (DE)
(72) Erfinder: YAN, Xiaofeng, 71384 Weinstadt (DE)
(74) Vertreter: Bee, Joachim
(86) Internationale Anmeldenummer: PCT/EP2010/066325
(87) Internationale Veröffentlichungsnummer: WO 2011/072937

(56) Entgegenhaltungen:
- EP-A1- 1 026 450
- JP-A- 2005 243 580
- JP-A- 2008 222 041
- KR-A- 20080 053 717
- US-A- 2 786 740
- US-A- 4 594 082
- US-A- 5 261 946

## Beschreibung

Die vorliegende Erfindung betrifft ein Verfahren zur Minderung der Feuchtigkeit eines Gases in einem Batteriegehäuseinnenraum sowie eine Vorrichtung zur Minderung der Feuchtigkeit in einem Batteriegehäuseinnenraum eines Energiespeichersystems.

Das Verfahren sowie die Vorrichtung sind bevorzugt zur Minderung der Feuchtigkeit von Batteriegehäuseinnenräumen, in denen Batteriezellen bzw. Batterien angeordnet sind, zu verwenden. Batteriezellen sowie aus Batteriezellen zusammengesetzte Batterien bilden bekannterweise einen oder mehrere Akkumulatoren aus, die elektrisch ladbar und wieder entladbar sind. Eine Batteriezelle ist dabei eine einzelne galvanische Zelle, die je nach Kombination der Materialien der Elektroden der Zelle eine charakteristische Spannung liefert. Die Batteriezellen können miteinander in Reihe oder parallel geschaltet eine Batterie ausbilden.

### Stand der Technik

Insbesondere Lithium-Ionen-Batterien werden in letzter Zeit verstärkt in Handys, Laptops und anderen tragbaren, elektronischen Geräten eingesetzt. Außerdem nimmt die Anwendung von Lithium-Ionen-Batterien als Energiespeicher in elektrisch anzutreibenden Kraftfahrzeugen immer mehr zu. Zur Gewährung einer ausreichenden Betriebssicherheit sowie Leistungsbereitstellung sind die Lithium-Ionen-Batterien dabei in einem optimalen Temperaturbereich zu betreiben, weshalb in der unmittelbaren Umgebung der Batterien oftmals ein oder mehrere Kühlsysteme zur Kühlung der Batterien angeordnet sind. Diese Kühlsysteme sind üblicherweise ebenfalls in einem die Batterien bzw. Batteriezellen umschließenden Gehäuse angeordnet. Das Gehäuse übernimmt die Funktion der Befestigung, des Schutzes der Abdichtung gegen die Umwelt und der thermischen sowie elektrischen Isolation der Batterien. Im Batteriegehäuse sind außerdem für gewöhnlich neben den Batteriemodulen und dem als Thermomanagementsystem ausgestaltetem Kühlsystem Leistungselektronik sowie elektrische Leitungen zur Steuerung der Batterien beim Lade- und Entladevorgang angeordnet. Derartige elektronische Steuerungen sind gegenüber Druckschwankungen relativ empfindlich, sodass das Batteriegehäuse, in dem das Steuergerät untergebracht ist, ein Druckausgleichsventil aufweisen muss. Dieses Druckausgleichsventil öffnet sich, wenn ein kritischer Druckdifferenzwert überschritten wird. Das heißt, dass das Gehäuse gegenüber der Umgebungsluft unter bestimmten Bedingungen geöffnet ist und somit ein Austausch von dem im Gehäuse eingeschlossenen Gas mit der Außenluft stattfinden kann, sodass das Eindringen von Feuchtigkeit, die in der Umgebungsluft enthalten ist, in das Gehäuse nicht vermieden werden kann. Bei Temperaturschwankungen kann es demzufolge, insbesondere bei Aktivierung des Kühlsystems innerhalb des Gehäuses, zu Kondensationsvorgängen kommen, sodass Kondenswasser gebildet wird, welches zu Kurzschlüssen und/oder zu Korrosion führen kann.

So ist z.B. aus JP 2008222041 A ein Verfahren zur Kühlung von Batterien bekannt, bei dem von außen Luft kontrolliert einem Batteriegehäuse zugeführt wird und anschließend die Luft den Innenraum des Batteriegehäuses durchströmt.

Der Erfindung liegt somit die Aufgabe zugrunde, ein Verfahren und eine Vorrichtung zur Verfügung zu stellen, mittels derer in einfacher und zuverlässiger Weise die Feuchtigkeit eines im Batteriegehäuseinnenraum aufgenommenen Gases, insbesondere bei Druckausgleich unter einem kritischen Wert gehalten werden kann.

Diese Aufgabe wird durch das erfindungsgemäße Verfahren nach Anspruch 1 sowie durch die erfindungsgemäße Vorrichtung nach Anspruch 4 gelöst. Vorteilhafte Ausgestaltungen des Verfahrens sind in den Unteransprüchen 2 und 3 angegeben, und vorteilhafte Ausgestaltungen der erfindungsgemäßen Vorrichtung sind in den Unteransprüchen 5 bis 8 angegeben.

### Offenbarung der Erfindung

Erfindungsgemäß wird ein Verfahren zur Minderung der Feuchtigkeit eines Gases in einem Batteriegehäuseinnenraum zur Verfügung gestellt, bei dem ein Gas mit einem geringeren Wasserdampfanteil als das Gas im Batteriegehäuseinnenraum mittels einer Trocknungseinrichtung erzeugt und in den Batteriegehäuseinnenraum eingeleitet wird und ein Gas aus dem Batteriegehäuseinnenraum herausgeleitet wird, sodass der Batteriegehäuseinnenraum zumindest teilweise mit dem Gas mit geringerem Wasserdampfanteil ausgefüllt ist. Dabei ist das Gas, welches vor Einfüllung des Gases mit verringertem Wasserdampfanteil im Gehäuse aufgenommen ist, üblicherweise Luft. Das erfindungsgemäße Verfahren ist nicht auf die Ein- und Ausleitung von reinen Gasen beschränkt, sondern im Sinne der Erfindung ist unter Gasen auch Gasgemische zu verstehen. Das Gas mit dem geringeren Wasserdampfanteil wird bevorzugt außerhalb des Batteriegehäuseinnenraums erzeugt. Dabei kann z. B. Außenluft der Trocknungseinrichtung zugeführt werden und einem Trocknungsprozess unterzogen werden, sodass das Gas in der Trocknungseinrichtung einen geringeren Wasserdampfanteil aufweist als die Außenluft zu diesem Zeitpunkt. Danach wird das getrocknete Gas in den Batteriegehäuseinnenraum geleitet, wobei es sich mit dem Gas in dem Batteriegehäuseinnenraum vermischt, sodass das im Batteriegehäuseinnenraum entstandenen Gasgemisch einen geringeren Wasserdampfanteil als das zuvor im Gehäuse enthaltene Gas aufweist, und/oder das getrocknete Gas verdrängt das zuvor im Batteriegehäuseinnenraum befindliche Gas, sodass das relativ trockene Gas das Gehäuse ausfüllt.

Erfindungsgemäß ist weiter vorgesehen, dass das Gas mit geringerem Wasserdampfanteil ein in Gasströmungsrichtung nach der außerhalb des Batteriegehäuseinnenraums angeordneten Trocknungseinrichtung im Batteriegehäuseinnenraum angeordnetes Trockenmittel durchströmt.

Zur Vermeidung eines Überdrucks wird Gas aus dem Gehäuse abgeleitet, wobei dieses abgeleitete Gas entweder das zuvor im Gehäuse aufgenommene Gas ist oder ein Gemisch aus diesem zuvor im Gehäuse enthaltenem Gas und dem eingeleiteten getrocknetem Gas. Das Verfahren dient somit zur Minderung der Feuchtigkeit insbesondere in Batteriegehäusen, in denen Lithium-Ionen-Akkumulatoren angeordnet sind, die als Energiequelle zu Antriebszwecken dienen.

Das erfindungsgemäße Verfahren kann somit derart ausgestaltet sein, dass das erzeugte Gas mit geringerem Wasserdampfanteil an Stelle des zuvor im Batteriegehäuseinnenraum enthaltenen Gases im Gehäuse aufgenommen ist. Demzufolge ist das aus dem Gehäuse herausgeleitete Gas das Gas, welches zuvor das Gehäuse ausfüllte. Nach der Herausleitung des zuvor im Gehäuse enthaltenen Gases befindet sich im Gehäuse nur noch das Gas mit dem verringerten Wasserdampfanteil.

Alternativ oder in Kombination zur Verdrängung des ursprünglich im Gehäuse enthaltenen Gases durch das Gas mit geringerem Wasserdampfanteil kann vorgesehen sein, dass das Gas mit dem geringeren Wasserdampfanteil sich mit dem im Batteriegehäuseinnenraum enthaltenem Gas zumindest teilweise vermischt. Demzufolge ist das aus dem Gehäuse herausgeleitete Gas ein Gasgemisch aus dem ursprünglich im Gehäuse enthaltenem Gas und dem Gas mit verringertem Wasserdampfanteil. Das nunmehr im Gehäuse enthaltene Gas weist aufgrund der Mischung ebenfalls einen geringeren Wasserdampfanteil auf als der Wasserdampfanteil des ursprünglich im Gehäuse enthaltenem Gases.

In einer bevorzugten Ausgestaltung des Verfahrens ist vorgesehen, dass die Herausleitung des Gases aus dem Batteriegehäuseinnenraum und eine dadurch erzeugte Unterdruckausbildung im Batteriegehäuseinnenraum und eine dadurch bewirkte Einleitung von Gas mit einem geringeren Wasserdampfanteil durch die Wirkung eines Unterdrucks an einem Gehäuseausgang realisiert wird, wobei der Unterdruck durch Gasströmung, insbesondere Umgebungsluftströmung, an einer mit dem Gehäuseausgang verbundenen Öffnung erzeugt wird. Bei einer bevorzugten Verwendung der Vorrichtung zur Trocknung der Luft bzw. des Gases in einem Batteriegehäuse eines Kraftfahrzeuges kann z. B. am Unterboden, Heckbereich oder Heckklappe des Kraftfahrzeuges eine Öffnung angeordnet sein, die mit dem Gehäuseauslass, z. B. mittels einer Leitung in Verbindung steht. Durch den an der Öffnung vorbeiströmenden Fahrtwind wird aufgrund des Injektionsprinzips ein Unterdruck an der Öffnung erzeugt, die ein Herausleiten des Gases aus dem Öffnungsbereich und somit auch aus dem Gehäuseauslass und dem Gehäuse selbst bewirkt. Es lässt sich somit ohne Anordnung einer Pumpe eine Saugwirkung zur Realisierung der Durchströmung des Gehäuses mit trockenem Gas bewirken.

Erfindungsgemäß wird außerdem eine Vorrichtung zur Minderung der Feuchtigkeit in einem Batteriegehäuseinnenraum zur Verfügung gestellt, welche eine Trocknungseinrichtung zur Verringerung des Wasserdampfanteils in einem Gas umfasst, wobei die Trocknungseinrichtung mittels wenigstens einer Leitung derart an den Batteriegehäuseinnenraum anschließbar oder angeschlossen ist, dass das von der Trocknungseinrichtung getrocknete Gas in den Batteriegehäuseinnenraum einleitbar ist. Es kann dabei vorgesehen sein, dass die Trocknungseinrichtung bereits fest am Gehäuse angeordnet ist und das Gehäuse somit ein Bestandteil der Vorrichtung ist, oder dass die Trocknungseinrichtung separat vorhanden ist und lediglich derart ausgestaltet ist, dass es an einen dafür vorgesehenen Anschluss am Gehäuse anschließbar ist. Das von der Trocknungseinrichtung zur Verfügung gestellte getrocknete Gas weist in seiner Zusammensetzung einen geringeren Wasserdampfanteil auf als das Gas, aus welchem es mittels Trocknung hergestellt wurde. Zur Einleitung des getrockneten Gases in das Gehäuse kann die Vorrichtung eine Pumpe umfassen. Diese Pumpe kann zwischen Trocknungseinrichtung und Gehäuse angeordnet sein oder auch an einem Gehäuseauslass zur Ableitung von Gas aus dem Gehäuse zur Vermeidung eines Überdrucks. Die Trocknungseinrichtung umfasst bevorzugt ein Kühlelement oder eine Kühleinheit, die ggf. als Bypass einer im Batteriegehäuse angeordneten Kühleinrichtung zur Kühlung der Batteriezellen ausgestaltet ist. Mittels der Trocknungseinrichtung wird über Kühlung von z. B. Außenluft die Kondensierung von in dieser Außenluft enthaltenen Feuchtigkeit und Abscheidung des daraus entstandenen Kondenswassers realisiert. Das Ergebnis ist ein relativ trockenes Gas, welches erfindungsgemäß in das Gehäuse eingeleitet wird.

Zur weiteren Verringerung der Feuchtigkeit im Batteriegehäuseinnenraum ist erfindungsgemäß vorgesehen, dass die Vorrichtung ein Trockenmittel umfasst, welches in Gasströmungsrichtung nach der Trocknungseinrichtung derart angeordnet ist, dass es von dem von der Trocknungseinrichtung getrockneten Gas durchströmbar ist. Dieses Trockenmittel kann z. B. Silikon sein. Das Trockenmittel muss nach gewisser Benutzungsdauer ausgetauscht werden, wobei der optimale Zeitpunkt des Austausches durch einen am oder im Trockenmittel angeordneten Feuchtigkeitssensor detektierbar ist.

Neben dem Sensor zur Detektion der Feuchtigkeit im Trockenmittel kann die Vorrichtung wenigstens einen ersten Sensor zur Erfassung des Wasserdampfanteils des Gases im Batteriegehäuseinnenraum und/oder wenigstens einen zweiten Sensor zur Erfassung des Wasserdampfanteils der das Gehäuse umgebenden Umgebungsluft und/oder wenigstens einen dritten Sensor zur Erfassung des Wasserdampfanteils des von der Trocknungseinrichtung erzeugten Gases umfassen. Die genannten Sensoren sind dabei mit einer Steuer- und Regeleinheit verbunden zur Auswertung der durch die Sensoren generierten Signale und zur Erstellung entsprechender Signale zur Steuerung und/oder Regelung der Durchströmung des Batteriegehäuseinnenraums.

Hinzukommend oder alternativ kann die Vorrichtung wenigstens einen Leckage-Sensor zur Erfassung einer Gas-Leckage aus dem Batteriegehäuseinnenraum umfassen. Mittels dieses Leckage-Sensors ist feststellbar, wie groß der Anteil von je Zeiteinheit in das Gehäuse zuströmender Umgebungsluft ist, um dementsprechend und der Luftfeuchte der Umgebungsluft angemessen getrocknete Luft in das Gehäuse einzuleiten. Die ermittelte Leckagerate hat einen großen Einfluss auf die einzustellenden Durchström-Intervalle. Auch der genannte Leckage-Sensor ist mit der Steuer- und Regeleinheit verbunden.

Vorteilhafterweise umfasst die Vorrichtung wenigstens ein mit dem Batteriegehäuseinnenraum verbundenes Druckausgleichsventil, wobei das Druckausgleichsventil derart eingerichtet ist, dass es die Funktion eines Stellgliedes zur Beeinflussung des Volumenstromes von Gas mit verringertem Wasserdampfanteil in den Batteriegehäuseinnenraum übernehmen kann.

In bevorzugter Ausgestaltung ist vorgesehen, dass die von der Vorrichtung umfasste Trocknungseinrichtung eine Klimaanlage aufweist, mittels derer Umgebungsluft aufnehmbar, der aufgenommenen Umgebungsluft Wärme entziehbar und die aufgenommene Umgebungsluft somit abkühlbar ist und dabei anfallendes Kondensat von der aufgenommenen Umgebungsluft separierbar ist. Die dadurch hergestellte trockene oder getrocknete Luft wird erfindungsgemäß in den Batteriegehäuseinnenraum geleitet. Die Klimaanlage kann dabei derart ausgestaltet sein, dass die trockene Luft wieder erwärmt wird. Die Klimaanlage kann dabei ein Bestandteil oder eine Ausrüstungskomponente eines Kraftfahrzeugs sein, insbesondere bei Verwendung der erfindungsgemäßen Vorrichtung und des erfindungsgemäßen Verfahrens zur Trocknung des Gases in einem Batteriegehäuse einer Batterie, die zum Antrieb des Kraftfahrzeuges dient.

Eine derartige Klimaanlage funktioniert nach dem "Reheat"-Prinzip, wobei die Außenluft zuert durch einen Verdampfer strömt, die Wärme aus der Außenluft mittels Kältemittel entzogen wird und sich die Außenluft somit bis auf fast 0°C abkühlt. Bedingt durch die rasche Temperaturreduzierung kondensiert der gasförmige Wasserdampf in der Außenluft zu flüssigem Wasser und wird durch einen Wasserscheider ausgeschieden. Die trockene Luft kann anschließend über einen Wärmetauscher wieder auf die von einem Nutzer eingestellte Temperatur aufgeheizt werden.

Die erfindungsgemäße Vorrichtung basiert somit bevorzugt auf einer Trocknung von Außenluft, die außerhalb des Batteriepacks bereitgestellt wird. Die Vorrichtung umfasst ein System zur Erzeugung von Trockenluft aus Außenluft, nämlich der Trocknungseinrichtung, und ein Luftleitsystem zu Zuführung von Trockenluft und Abführung von feuchter Batteriegehäuseinnenraumluft mit mindestens je einem steuerbaren Ventil auf der Einlass- bzw. auf der Auslassseite. Außerdem ist das Druckausgleichsventil vorzugsweise mit der Luftzuleitung verbunden. Die erfindungsgemäße Vorrichtung umfasst bevorzugt Sensoren zur Feuchtigkeitsüberwachung und eine Regel- und Steuereinheit. Die Bereitstellung der Trockenluft kann auch über ein schließbares Bauteil wie z. B. ein Klappensteuerung erfolgen, wobei bei Anwendung eines Klimagerätes, z. B eines Klimagerätes eines Kraftfahrzeuges, die Klappensteuerung im Umluft-Modus schließt und dafür sorgt, dass relativ feuchte Kraftfahrzeug-Innenluft im Umluftmodus nicht in die Zuleitung des Luftführungssystems gelangt.

Die Vorrichtung kann außerdem Temperatursensoren zur Ermittlung von Umgebungs- und Batterietemperaturen umfassen, wobei die ermittelten Temperaturen als Ausgangssignale im Steuer- bzw. Regelprozess eingesetzt werden, um den Durchspülprozess in optimaler Weise durchzuführen. Ist die Temperatur im Batteriegehäuseinnenraum höher als eine Umgebungstemperatur, kann überprüft werden, ob ein Durchspülen direkt mit Außenluft ausgelöst wird, wenn davon auszugehen ist, dass die Außenluft trockener ist, als das im Batteriegehäuseinnenraum aufgenommene Gas. Ein Differenzdrucksensor, der ebenfalls von der Vorrichtung erfasst sein kann, dient zur Ermittlung von Druckdifferenzen zwischen der Umgebung und dem BatterieBatteriegehäuseinnenraum, wobei die Regel- und Steuereinheit vom Differenzdrucksensor ein Messsignal erhält, welches Träger der Information ist, wann das Druckausgleichsventil geöffnet und geschlossen ist. Demzufolge kann die Regel- und Steuereinheit erfassen, welches Volumen an Außenluft in das Gehäuse gelangt ist.

Das ebenfalls von der Vorrichtung vorteilhafterweise umfasste Luftführungssystem sorgt dafür, dass die Trockenluft aus der Trocknungseinrichtung dem Batteriegehäuseinnenraum zugeführt wird und das vorher im Batteriegehäuseinnenraum aufgenommene Gas aus diesem herausgeleitet wird. Das Druckausgleichsventil ist mit der Zuleitung bevorzugt derart verbunden, dass im Fall eines Druckausgleichs bei der Ventilöffnung nur Trockenluft in das Gehäuseinnere gelangen kann. Diese Maßnahme garantiert eine längere Zeitdauer der Trockenheit der Batteriegehäuseinnenraumluft und verlängert die Intervalle zwischen den Durchspülungen mit Trockenluft. Bevorzugt sind Ein- und Auslässe als Bestandteile des Luftführungssystems am Gehäuse derart angeordnet, dass die inneren Strukturen der Batterieanordnung berücksichtigt wird, nämlich indem idealerweise Einlass und Auslass diagonal zueinander angeordnet sind, wodurch ein sogenannter "Luftkurzschluss", das heißt, eine direkte Strömung auf kürzestem Wege vom Einlass zum Auslass ohne Umströmung weiterer Bauteile oder eine schlechte Umströmung mit Gebieten ohne Strömungsverhältnisse vermieden werden kann. Die Erfindung ist dabei nicht auf die Anordnung nur eines Einlasses und einen Auslasses beschränkt, sondern es können mehrere, ggf. parallel oder in Reihe angeordnet Ein- und Auslässe am Gehäuse angeordnet sein.

Das Verfahren zur Durchspülung des Batteriegehäuses ist bevorzugt in regelmäßigen Zeitabständen auszuführen, insbesondere morgens und abends, nämlich wenn unterschiedliche Temperaturverhältnisse innerhalb und außerhalb des Gehäuses vorliegen. Außerdem ist bevorzugt die Durchspülung bei Fahrtbeginn und Fahrtende eines mit der Vorrichtung versehenen Kraftfahrzeuges sowie in Abhängigkeit von der Leckagerate des Batteriegehäuses und der Außentemperatur durchzuführen. Ziel dabei ist es, zu vermeiden, dass ein kritischer Feuchtigkeitswert im Batteriegehäuseinnenraum, oberhalb dessen es zu gefährlicher Kondenswasserbildung kommen kann, vermieden wird. Üblicherweise sollte dabei nicht Luft aus dem Umluft-Betrieb einer Klimaanlage des Kraftfahrzeugs zur Durchspülung des Gehäuses verwendet werden, das diese aufgrund der Atmung und Transpiration der Insassen eine relativ hohe Feuchtigkeit aufweisen kann, sodass unter bestimmten Bedingungen eine ausreichende Trocknung dieses Gases nicht gewährleistet ist. In besonderer Ausgestaltung kann bei Absaugung des im Gehäuse aufgenommenen Gases aufgrund eines Unterdrucks ein einlassseitiges Regelventil durch das Druckausgleichventil ersetzt werden, insbesondere, wenn das Druckausgleichsventil elektrisch betätigbar und ansteuerbar ist. In diesem Fall ist das Auslassventil der auslösende Aktor. Wenn das Auslassventil geöffnet wird, sinkt der Batteriegehäuseinnenraumdruck und erzeugt eine Druckdifferenz, die wiederum zur Öffnung des Druckausgleichsventils führt. Die Regel- und Steuereinheit muss in diesem Fall nicht nur die Koordinierung der Durchströmung zur Erreichung einer ausreichenden Trocknung realisieren, sondern auch den Druckausgleich steuern. Die Erfassung des Drucks im Batteriegehäuseinnenraum lässt sich mittels des Differenzdrucksensors durchführen. Gegebenenfalls kann die Steuer- und Regeleinheit derart ausgestaltet sein, dass sie im Fall von Trocknungsbedarf im Batteriegehäuseinnenraum und eingestelltem Umluft-Modus der Klimaanlage die Klimaanlage auf Frischluft-Betrieb umstellt, um somit die Einströmung von Umluft in das Batteriegehäuse zu vermeiden.

Die Erfindung wird im Folgenden anhand der beiliegenden Zeichnungen erläutert.

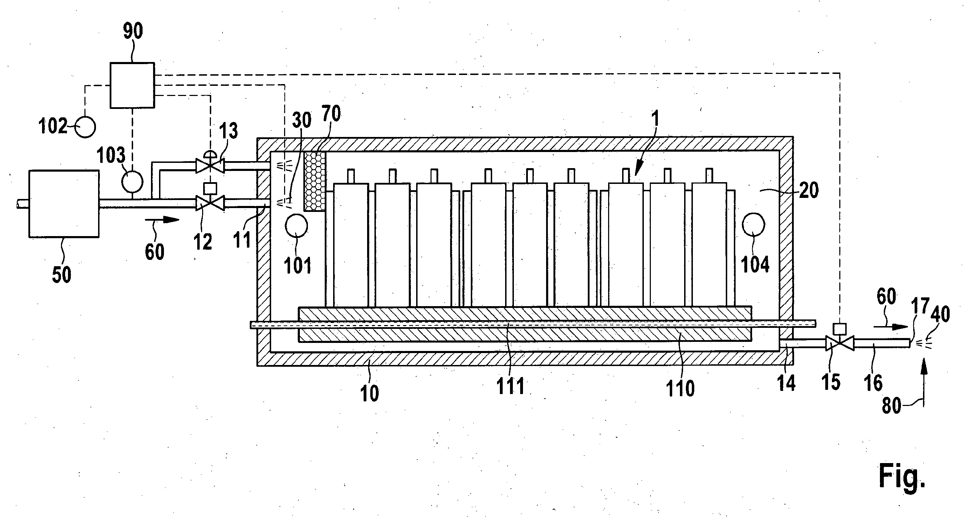

Es zeigt dabei die einzige Figur eine Batterie in Schnittansicht von der Seite mit angeschlossener Trocknungseinrichtung.

Es ist aus der Figur eine Batterie 1 ersichtlich, die aus einer Mehrzahl von Batteriezellen, die elektrisch leitfähig miteinander verbunden sind, gebildet ist. Die Batterie 1 befindet sich in einem im Wesentlichen geschlossenen Batteriegehäuse 10. Dabei ist die Batterie 1 auf ein Kühlsystem 110 aufgestellt, welches mit einer Kühlmediumleitung 111 zur Durchströmung mit Kühlmedium zwecks optimaler Abkühlung ausgestattet ist. An einem Gehäuseeingang 11 ist ein Einlassventil 12 angeschlossen, welches mit einer Trocknungseinrichtung 50 in fluidtechnischer Verbindung steht. In einem Bypass zum Einlassventil 12 ist das Druckausgleichsventil 13 angeordnet, welches somit ebenfalls an den Batteriegehäuseinnenraum angeschlossen ist. Auf der gegenüberliegenden Seite weist das Batteriegehäuse 10 ein Gehäuseausgang 14 auf, an welchem ein Auslassventil 15 angeordnet ist. An das Auslassventil 15 schließt sich eine Leitung 16 an, die eine mit dem Gehäuseausgang verbundene Öffnung 17 aufweist. Im Innenraum des Batteriegehäuses 10 befindet sich neben der Batterie 1 sowie dem Kühlsystem 110 Gas 20. Von der Trocknungseinrichtung 50 wird Gas, z. B. Außenluft, aufgenommen und in beschriebener Art und Weise getrocknet. Das getrocknete Gas 30 wird in Gasströmungsrichtung 60 über das Einlassventil 13 und den Gehäuseeingang 11 in das Batteriegehäuse 10 geleitet. Dabei wird es, wie in der Figur dargestellt, durch ein Trockenmittel 70 hindurchströmen, wodurch der Wasserdampfanteil im getrockneten Gas 30 noch weiter vermindert wird. Im Batteriegehäuseinnenraum vermischt sich das getrocknete Gas 30 mit dem Gas im Batteriegehäuse 10 und/oder verdrängt dieses Gas 20 durch den Gehäuseausgang 14 und das Auslassventil 15 in die Umgebung. Dadurch wird ein Überdruck im Batteriegehäuse 10 vermieden.

Das Einlassventil 12, das Drucksausgleichsventil 13 sowie das Auslassventil 15 sind mit einer Regel- und Steuereinheit 90 verbunden, die zur Ansteuerung bzw. Regelung der Ventile zwecks Öffnung und Schließung dient. Die Regel- und Steuereinheit 90 ist außerdem mit einem ersten Sensor zur Erfassung des Wasserdampfanteils des Gases im Gehäuse 101, mit einem zweiten Sensor zur Erfassung des Wasserdampfanteils der das Gehäuse umgebenen Umgebungsluft 102 und/oder mit einem dritten Sensor zur Erfassung des Wasserdampfanteils des von der Trocknungseinrichtung erzeugten Gases 103 sowie ggf. mit einem Leckagesensor 104 verbunden. Mittels des ersten bis dritten Sensors kann der Regel- und Steuereinheit 90 jeweils ein entsprechendes Signal über den Wasserdampfanteil eines jeweiligen Gases im Gehäuse und/oder in der Umgebungsluft und/oder in der Gasströmung nach der Trocknungseinrichtung zugeführt werden, wobei die Regel- und Steuereinheit 90 die entsprechenden Signale verwertet und zur Ansteuerung bzw. Regelung der Ventile nutzt.

Das Batteriegehäuse 10 bzw. die mit dem Gehäuseausgang verbundene Öffnung 17 kann derart angeordnet sein, dass bei Verwendung der erfindungsgemäßen Vorrichtung in einem Kraftfahrzeug eine Umgebungsluftströmung 80 an dieser Öffnung 17 einen Unterdruck, der über das Auslassventil 15 bis in den Batteriegehäuseinnenraum wirkt und somit eine Herausleitung des Gases im Batteriegehäuse 10 bewirkt. Das Druckausgleichsventil 13 wiederum öffnet automatisch oder aufgrund eines Steuer- oder Regelsignals der Regel- und Steuereinheit 90, sodass dem Batteriegehäuseinnenraum von der Trocknungseinrichtung getrocknetes Gas oder, bei entsprechender Trockenheit der Umgebungsluft, Umgebungsluft zugeführt wird. Es lässt sich somit ohne die Durchströmung des Batteriegehäuses 10 mit trockener Luft ohne Einsatz einer energieaufwendigen Pumpe realisieren.

## Patentansprüche

1. Verfahren zur Minderung der Feuchtigkeit eines Gases in einem Batteriegehäuseinnenraum, bei dem ein Gas (30) mit einem geringeren Wasserdampfanteil als das Gas (20) im Batteriegehäuseinnenraum mittels einer Trocknungseinrichtung (50) erzeugt und in den Batteriegehäuseinnenraum eingeleitet wird und ein Gas (40) aus dem Batteriegehäuseinnenraum herausgeleitet wird, so dass der Batteriegehäuseinnenraum zumindest teilweise mit dem Gas (30) mit geringerem Wasserdampfanteil ausgefüllt ist,
dadurch gekennzeichet,
dass das Gas (30) mit geringerem Wasserdampfanteil ein in Gasströmungsrichtung (60) nach der außerhalb des Batteriegehäuseinnenraums angeordneten Trocknungseinrichtung (50) im Batteriegehäuseinnenraum angeordnetes Trockenmittel (70) durchströmt.

2. Verfahren zur Minderung der Feuchtigkeit nach Anspruch 1, bei dem das Gas (30) mit geringerem Wasserdampfanteil das zuvor im Batteriegehäuseinnenraum enthaltene Gas (20) zumindest teilweise verdrängt.

3. Verfahren zur Minderung der Feuchtigkeit wenigstens einem der Ansprüche 1 oder 2, bei dem sich das Gas (30) mit geringerem Wasserdampfanteil mit dem im Batteriegehäuseinnenraum enthaltenen Gas (20) zumindest teilweise vermischt.

4. Vorrichtung zur Minderung der Feuchtigkeit in einem Batteriegehäuseinnenraum, welche eine Trocknungseinrichtung (50) zur Verringerung des Wasserdampfanteils in einem Gas umfasst, wobei die Trocknungseinrichtung (50) mittels wenigstens einer Leitung derart an den Batteriegehäuseinnenraum anschließbar oder angeschlossen ist, dass das von der Trocknungseinrichtung (50) getrocknete Gas (30) in den Batteriegehäuseinnenraum einleitbar ist,
**dadurch gekennzeichnet,**
**dass** die Vorrichtung ein Trockenmittel (70) umfasst, welches in Gasströmungsrichtung (60) nach der Trocknungseinrichtung (50) derart im Batteriegehäuseinnenraum angeordnet ist, dass es von dem von der außerhalb des Batteriegehäuseinnenraums angeordneten Trocknungseinrichtung (50) getrockneten Gas (30) durchströmbar ist.

5. Vorrichtung zur Minderung der Feuchtigkeit nach Anspruch 4, die wenigstens einen ersten Sensor (101) zur Erfassung des Wasserdampfanteils des Gases im Batteriegehäuseinnenraum und/oder wenigstens einen zweiten Sensor (102) zur Erfassung des Wasserdampfanteils der das Batteriegehäuse umgebenden Umgebungsluft und/oder wenigstens einen dritten Sensor (103) zur Erfassung des Wasserdampfanteils des von der Trocknungseinrichtung (50) erzeugten Gases umfasst.

6. Vorrichtung zur Minderung der Feuchtigkeit nach wenigstens einem der Ansprüche 4 und 5, die wenigstens einen Leckage-Sensor (104) zur Erfassung einer Gas-Leckage aus dem Batteriegehäuseinnenraum umfasst.

7. Vorrichtung zur Minderung der Feuchtigkeit nach wenigstens einem der Ansprüche 4 bis 6, die wenigstens ein mit dem Batteriegehäuseinnenraum verbundenes Druckausgleichsventil (13) umfasst, wobei das Druckausgleichsventil (13) derart eingerichtet ist, dass es die Funktion eines Stellgliedes zur Beeinflussung des Volumenstromes von Gas (30) mit verringertem Wasserdampfanteil in den Batteriegehäuseinnenraum übernehmen kann.

8. Vorrichtung zur Minderung der Feuchtigkeit nach wenigstens einem der Ansprüche 4 bis 7, bei der die Trocknungseinrichtung (50) eine Klimaanlage umfasst, mittels derer Umgebungsluft aufnehmbar, der aufgenommenen Umgebungsluft Wärme entziehbar und die aufgenommene Umgebungsluft somit abkühlbar ist und dabei anfallendes Kondensat von der aufgenommenen Umgebungsluft separierbar ist.

## Claims

1. Method for reducing the moisture in a gas in a battery housing interior, in which method a gas (30) with a lower water vapour content than the gas (20) in the battery housing interior is generated by means of a drying device (50) and is introduced into the battery housing interior, and a gas (40) is carried out of the battery housing interior, so that the battery housing interior is at least partially filled with the gas (30) with the relatively low water vapour content, **characterized in that** the gas (30) with the relatively low water vapour content flows through a desiccant (70) which is arranged in the battery housing interior downstream of the drying device (50), which is arranged outside the battery housing interior, in the direction (60) of gas flow.

2. Method for reducing moisture according to Claim 1, in which method the gas (30) with the relatively low water vapour content at least partially displaces the gas (20) which was previously contained in the battery housing interior.

3. Method for reducing moisture according to at least one of Claims 1 and 2, in which method the gas (30) with the relatively low water vapour content is at least partially mixed with the gas (20) which is contained in the battery housing interior.

4. Apparatus for reducing the moisture in a battery housing interior, which apparatus comprises a drying device (50) for reducing the water vapour content in a gas, wherein the drying device (50) can be connected or is connected to the battery housing interior by means of at least one line in such a way that the gas (30) which is dried by the drying device (50) can be introduced into the battery housing interior, **characterized in that** the apparatus comprises a desiccant (70) which is arranged in the battery housing interior downstream of the drying device (50) in the direction (60) of gas flow in such a way that the gas (30) which is dried by the drying device (50) which is arranged outside the battery housing interior can flow through the said desiccant.

5. Apparatus for reducing moisture according to Claim 4, which apparatus comprises at least one first sensor (101) for detecting the water vapour content of the gas in the battery housing interior and/or at least one second sensor (102) for detecting the water vapour content of the ambient air which surrounds the battery housing and/or at least one third sensor (103) for detecting the water vapour content of the gas which is generated by the drying device (50).

6. Apparatus for reducing moisture according to at least one of Claims 4 and 5, which apparatus comprises at least one leakage sensor (104) for detecting gas leakage from the battery housing interior.

7. Apparatus for reducing moisture according to at least one of Claims 4 to 6, which apparatus comprises at least one pressure-compensation valve (13) which is connected to the battery housing interior, wherein the pressure-compensation valve (13) is designed in such a way that it can perform the function of an actuating element for influencing the volumetric flow rate of gas (30) with the reduced water vapour content into the battery housing interior.

8. Apparatus for reducing moisture according to at least one of Claims 4 to 7, in which apparatus the drying device (50) comprises an air-conditioning system by means of which ambient air can be collected, heat can be drawn from the collected ambient air, and the collected ambient air can therefore be cooled, and condensate which is produced in the process can be separated from the collected ambient air.

## Revendications

1. Procédé permettant de réduire l'humidité d'un gaz dans l'espace intérieur d'un boîtier de batterie, dans lequel un gaz (30) ayant une plus faible proportion de vapeur d'eau que le gaz (20) dans l'espace intérieur de boîtier de batterie est généré au moyen d'un dispositif de séchage (50) et est introduit dans l'espace intérieur de boîtier de batterie et un gaz (40) est évacué de l'espace intérieur de boîtier de batterie de telle sorte que l'espace intérieur de boîtier de batterie soit au moins en partie rempli avec le gaz (30) ayant la plus faible proportion de vapeur d'eau,
**caractérisé en ce que**
le gaz (30) ayant la plus faible proportion de vapeur d'eau circule à travers un moyen de séchage (70) disposé dans l'espace intérieur de boîtier de batterie, dans la direction d'écoulement du gaz (60) après le dispositif de séchage (50) disposé à l'extérieur de l'espace intérieur de boîtier de batterie.

2. Procédé permettant de réduire l'humidité selon la revendication 1, dans lequel le gaz (30) ayant la plus faible proportion de vapeur d'eau refoule au moins en partie le gaz (20) contenu au préalable dans l'espace intérieur de boîtier de batterie.

3. Procédé permettant de réduire l'humidité selon au moins l'une quelconque des revendications 1 ou 2, dans lequel le gaz (30) ayant la plus faible proportion de vapeur d'eau se mélange au moins en partie avec le gaz (20) contenu dans l'espace intérieur de boîtier.

4. Dispositif permettant de réduire l'humidité dans un espace intérieur de boîtier de batterie, lequel comprend un dispositif de séchage (50) permettant de réduire la proportion de vapeur d'eau dans un gaz, le dispositif de séchage (50) pouvant être raccordé ou étant raccordé au moyen d'au moins une conduite à l'espace intérieur de boîtier de batterie de telle sorte que le gaz (30) séché par le dispositif de séchage (50) puisse être introduit dans l'espace intérieur de boîtier de batterie,
**caractérisé en ce que**
le dispositif comprend un moyen de séchage (70) qui est disposé dans la direction d'écoulement du gaz (60) après le dispositif de séchage (50) dans l'espace intérieur de boîtier de batterie de telle sorte qu'il puisse être traversé par le gaz (30) séché par le dispositif de séchage (50) disposé à l'extérieur de l'espace intérieur de boîtier de batterie.

5. Dispositif permettant de réduire l'humidité selon la revendication 4, qui comprend au moins un premier capteur (101) permettant de détecter la proportion de vapeur d'eau du gaz dans l'espace intérieur de boîtier de batterie et/ou au moins un deuxième capteur (102) permettant de détecter la proportion de vapeur d'eau de l'air environnant entourant le boîtier de batterie et/ou au moins un troisième capteur (103) permettant de détecter la proportion de vapeur d'eau du gaz généré par le dispositif de séchage (50).

6. Dispositif permettant de réduire l'humidité selon au moins l'une quelconque des revendications 4 et 5, qui comprend au moins un capteur de fuite (104) permettant de détecter une fuite de gaz hors de l'espace intérieur de boîtier de batterie.

7. Dispositif permettant de réduire l'humidité selon au moins l'une quelconque des revendications 4 à 6, qui comprend au moins une soupape d'équilibrage de la pression (13) connectée à l'espace intérieur de boîtier de batterie, la soupape d'équilibrage de la pression (13) étant prévue de telle sorte qu'elle puisse assurer la fonction d'un actionneur pour influencer le débit volumique de gaz (30) avec une proportion de vapeur d'eau réduite dans l'espace intérieur de boîtier de batterie.

8. Dispositif permettant de réduire l'humidité selon au moins l'une quelconque des revendications 4 à 7, dans lequel le dispositif de séchage (50) comprend une installation de climatisation, au moyen de laquelle l'air environnant peut être reçu, de la chaleur peut être extraite de l'air environnant reçu et l'air environnant reçu peut ainsi être refroidi et le condensat ainsi formé peut être séparé de l'air environnant reçu.
